Europäisches Patentamt

European Patent Office

Office européen des brevets

(19)

(11) Veröffentlichungsnummer: **0 075 298**
**B1**

# EUROPÄISCHE PATENTSCHRIFT

(12)

(45) Veröffentlichungstag der Patentschrift:
02.05.85

(51) Int. Cl.⁴: **C 02 F 3/12,** C 02 F 3/26,
C 02 F 3/10

(21) Anmeldenummer: 82108611.3

(22) Anmeldetag: 17.09.82

(54) Verfahren und Vorrichtung zur biologischen Reinigung von Abwasser.

(30) Priorität: 17.09.81 DE 3137055

(43) Veröffentlichungstag der Anmeldung:
30.03.83 Patentblatt 83/13

(45) Bekanntmachung des Hinweises auf die Patenterteilung:
02.05.85 Patentblatt 85/18

(84) Benannte Vertragsstaaten:
AT CH DE FR GB IT LI NL SE

(56) Entgegenhaltungen:
EP - A - 0 046 901
DE - A - 2 002 926
DE - A - 2 249 137
US - A - 2 071 591

(73) Patentinhaber: Linde Aktiengesellschaft,
Abraham-Lincoln-Strasse 21, D-6200 Wiesbaden (DE)

(72) Erfinder: Reimann, Hans, Dr. rer. nat.,
Rudolf-Wilke-Weg 21, D-8000 München 71 (DE)
Erfinder: Fuchs, Uwe, Heiterwanger Strasse 46,
D-8000 München 70 (DE)

(74) Vertreter: Schaefer, Gerhard, Dr., Linde
Aktiengesellschaft Zentrale Patentabteilung,
D-8023 Höllriegelskreuth (DE)

ACTORUM AG

## Beschreibung

Die Erfindung betrifft ein Verfahren zur biologischen Reinigung von organische Verunreinigungen enthaltendem Abwasser, bei dem das Abwasser in einem Reaktor in Gegenwart von auf einem Trägermaterial fixierter Biomasse mit Luft und/oder reinem Sauerstoff begast und anschliessend in einer Nachklärung gereinigtes Wasser und Schlamm getrennt wird und bei dem in den Reaktor als Trägermaterial für die Mikroorganismen Stoffteilchen in stückiger und/oder granulierter Form in solchen Mengen eingebracht werden, dass die einzelnen Stoffteilchen frei beweglich im Abwasser schweben. Ein solches Verfahren ist aus der US-A Nr. 2071591 bekannt. Dabei ist die Biomasse vollständig auf in einem Belebungsbecken frei beweglichen Trägerteilchen, bestehend aus natürlichen Schwämmen oder Materialien mit ähnlicher poröser und elastischer Struktur, angesiedelt. Da dadurch die Biomassenkonzentration gegenüber herkömmlichen Belebungsverfahren erhöht werden kann, ist eine Rückführung von Belebtschlamm aus einer Nachklärung nicht vorgesehen, so dass im Belebungsbecken neben der auf den Trägerteilchen fixierten Biomasse kein freier Belebtschlamm vorhanden ist und der bei herkömmlichen Belebungsverfahren erforderliche Energieaufwand für die Rückführung von Belebtschlamm aus einer Nachklärung eingespart werden kann. Nachteilig bei diesem bekannten Verfahren ist, dass die Naturschwämme oder ähnliche Materialien in der Regel in unregelmässiger Verteilung verhältnismässig grosse Poren besitzen, in denen sich grosse Gasmengen sammeln können, was die Flotationsneigung der aus solchen Materialien hergestellten Trägerteilchen begünstigt. Dadurch ist aber dann die Gefahr gegeben, dass die die Biomasse tragenden Trägerteilchen aufschwimmen und dadurch die Biomasse nur in geringem Mass zur Behandlung der gesamten Abwassermenge zur Verfügung steht. Ausserdem besteht bei der Grösse von Naturschwämmen die Möglichkeit, dass die in den Poren fixierte Biomasse nicht ausreichend mit Sauerstoff versorgt wird und abstirbt.

Aus der DE-A Nr. 2002926 ist darüber hinaus ein biologisches Abwasserreinigungsverfahren unter Verwendung eines Tropfkörpers bekannt, bei dem das Abwasser über feststehende, aus offenporigem Kunststoffschaum gebildete Tropfkörperelemente verrieselt wird. Dabei ist darauf hingewiesen, dass bei Verwendung eines offenporigen Kunststoffschaums als Ansiedlungsfläche für den biologischen Rasen eines Tropfkörpers die Gefahr gegeben ist, dass dieser vollkommen zuwachsen kann, was Verstopfungen und Behinderungen des Stoffaustausches nach sich ziehen würde und dass dem nur durch eine direkte Zwangsbelüftung des den biologischen Rasen tragenden Kunststoffschaums begegnet und erst durch die Zwangsbelüftung eine ausreichende Sauerstoffversorgung sichergestellt werden kann.

Der Erfindung liegt die Aufgabe zugrunde, ein Verfahren der eingangs genannten Art so auszugestalten, dass auf einfache und wirtschaftliche Weise konstant hohe Reinigungswerte von insbesondere hochbelasteten Abwässern erzielt werden können.

Diese Aufgabe wird erfindungsgemäss dadurch gelöst, dass als Trägermaterial Stoffteilchen aus synthetischen organischen Polymerverbindungen mit einer Grösse von 5 bis 50 mm, mit offenen Makroporen von 0,1 bis 3 mm und mit einem spezifischen Gewicht im trockenen Zustand von 10 bis 200 kg/m³ verwendet werden und dass zumindest zeitweise Belebtschlamm aus der Nachklärung in den Reaktor zurückgeleitet und im Reaktor neben der auf dem Trägermaterial fixierten Biomasse auch freier Belebtschlamm aufrechterhalten wird.

Die Verwendung der angegebenen Stoffteilchen als Trägermaterial für die Mikroorganismen bietet diesen eine grosse aktive Oberfläche zur Ansiedlung. Durch die Makroporen der Stoffteilchen werden dabei die Bakterien zu einem dezentralisierten Wachstum gezwungen, wodurch sich eine wesentlich grössere Stoffaustauschfläche als bei herkömmlichen Belebtschlammflocken ergibt. Da ausserdem die durch die Abwasserinhaltsstoffe wachsenden Mikroorganismen fest in den Poren bis ins Innere der Stoffteilchen angesiedelt sind und diese leicht im Reaktor zurückgehalten werden können, kann im Reaktor eine sehr hohe Trokkensubstanzkonzentration mit Werten über 15 g/l, die weit über den Trockensubstanzkonzentrationen bei herkömmlichen Belebtschlammverfahren liegt, eingehalten werden, die zum einen eine entsprechend geringe Überschussschlammentfernung erfordert und zum anderen eine sehr hohe Belastbarkeit mit Abwasser oder umgekehrt ausgedrückt eine geringe Aufenthaltszeit des Abwassers im Reaktor verbunden mit einer Einsparung an Reaktorvolumen ergibt. Mit der Möglichkeit des Zurückhaltens der Hauptmenge der sich aufbauenden Biomasse im Reaktor ist dabei trotz der hohen Trockensubstanzkonzentration keine grössere Nachklärung als bei bisherigen, ohne Trägerteilchen arbeitenden Belebtschlammverfahren notwendig. Vielmehr besteht aufgrund des geringeren Schlammvolumens der nicht fixierten Biomasse die Möglichkeit, das Nachklärbeckenvolumen gegenüber dem bei konventionellen Belebungsverfahren notwendigen zu verringern. Abgesehen davon ermöglicht die hohen Trockensubstanzkonzentration eine Reduzierung des Schlammrücklaufverhältnisses, was zu einer Einsparung an Pumpenergie bei der Förderung des Rücklaufschlamms führt.

Die freie Verteilung der Stoffteilchen wird durch deren geringes spezifisches Gewicht sowie durch einen der Sinkbewegung entgegengerichteten Gas- oder Flüssigkeitsstrom begünstigt. Dazu ist es lediglich notwendig, das zur Versorgung der Mikroorganismen erforderliche sauerstoffhaltige Gas in Form von Luft und/oder technischem Sauerstoff am Boden des Reaktors beispielsweise über eine herkömmliche fein-, mittel- oder grobblasige Begasung einzutragen oder das zu behandelnde Abwasser ebenso am Boden des Reaktors zuzuleiten. Durch das damit verbundene Aufwirbeln der einzelnen Stoffteilchen, das gegebenenfalls noch durch eine Umwälzeinrichtung verstärkt werden kann, wird eine Verbesserung des Stoffumsatzes erreicht. Ein Verlust an Biomasse ist dabei nicht zu befürchten, da die durch die Abwasserinhaltsstoffe wachsenden Mikroorganismen fest in den Poren bis ins Innere der einzelnen Stoffteilchen angesiedelt sind und somit bei mechanischer Einwirkung vor Abrieb geschützt sind.

Um die Schwebebewegung der einzelnen Stoffteilchen nicht übermässig zu behindern, ist es zweckmässig, die als Trägermaterial verwendeten Stoffteilchen in einer Menge in den Reaktor einzubringen, die einem Volumenanteil von 5 bis 70% des Reaktorvolumens entspricht. Je nach Fülldichte und Beschaffenheit der Stoffteilchen lässt sich damit in Abhängigkeit der Belastung des zu behandelnden Abwassers ein bestimmter Reaktortyp erzeugen. So wird der Reaktor bei einem Volumenanteil der Stoffteilchen von 5 bis 40% zweckmässigerweise als volldurchmischtes Belebungsbecken und bei einem Volumenanteil der Stoffteilchen von 40 bis 70% als Schwebebett- und/oder als Wirbelbettreaktor betrieben.

Die angegebene Grösse der einzelnen Stoffteilchen führt zu stabilen Bakterienansammlungen und gewährleistet eine Sauerstoffversorgung und einen Stofftransport bis ins Innere jedes einzelnen Stoffteilchens. Andererseits können, falls dies erwünscht ist, durch Limitierung der Konzentration an gelöstem Sauerstoff oder durch die Auswahl eines Durchmessers der einzelnen Stoffteilchen im oberen Bereich der angegebenen Werte im Inneren des Trägermaterials zusätzlich anoxische Zonen erzeugt werden, so dass im Reaktor gegebenenfalls auch Denitrifikationsvorgänge ablaufen können. Die angegebene Grösse der einzelnen Makroporen in den Stoffteilchen schliesst ein Verstopfen der Poren durch Verunreinigungen weitgehend aus und ermöglicht es, den Mikroorganismen eine grosse Oberfläche zur Ansiedlung zur Verfügung zu stellen.

Bei einer bevorzugten Ausführungsform des Verfahrens werden als Trägermaterial Stoffteilchen aus Polyurethanweichschaum, Harnstoff/Formaldehyd-Harzen, Polyäthylen, Polypropylen, Silikonpolymer verwendet. Auch Mischungen aus zwei oder mehreren dieser Materialien oder Stoffteilchen aus ähnlichen Stoffen mit offenen Makroporen, wie sie in der kunststoffverarbeitenden Industrie anfallen, erfüllen alle vorstehend beschriebenen, für ein geeignetes Trägermaterial notwendigen Eigenschaften, wobei noch dazu Rest- und Abfallstücke zum Einsatz kommen können. Zur Erzielung dieser Eigenschaften können die genannten Werkstoffe geschäumt oder gesintert werden. Wie sich gezeigt hat, kann 1 m³ solcher Schaumstoffteilchen mehr als 30 kg biologische Trockensubstanz aufnehmen und binden, so dass bei einer Schaumstofffüllung, die 50% des Reaktorvolumens ausmacht, die Schlammtrockensubstanz im Reaktor Werte über 15 g/l erreichen kann.

Besonders wirtschaftlich wird das erfindungsgemässe Verfahren, wenn auf das Trägermaterial vor dem Durchleiten des Abwassers durch den Reaktor Aktivkohlepulver aufgebracht wird. Damit kann bei gleichbleibendem Energieaufwand für den Sauerstoffeintrag in günstigen Fällen eine Verdoppelung der Sauerstoffeintragsleistung erreicht werden.

Neben der wirtschaftlichen Reinigung hochbelasteter Abwässer lässt sich das erfindungsgemässe Verfahren darüber hinaus auch bei solchen Abwassereinigungsanlagen anwenden, die bisher nur eine unvollständige Reinigungsleistung erlaubten. Besonders vorteilhaft ist es dabei, wenn in den Reaktor als zu reinigendes Abwasser der Ablauf eines Tropfkörpers und/oder einer chemischen und/oder chemisch-physikalischen Reinigungsstufe eingeleitet wird. Da im Reaktor die Biomassenkonzentration aufgrund des Vorhandenseins der Trägerteilchen hochgehalten werden kann, ist zur Behandlung des Ablaufs eine kurze Belüftungszeit ausreichend. Ausserdem ergibt sich eine nur geringe Belastung der Nachklärung und eine Blähschlammbildung, die vor allem in einem Tropfkörperablauf im Falle einer Belüftung auftreten kann, wird von vornherein unterbunden.

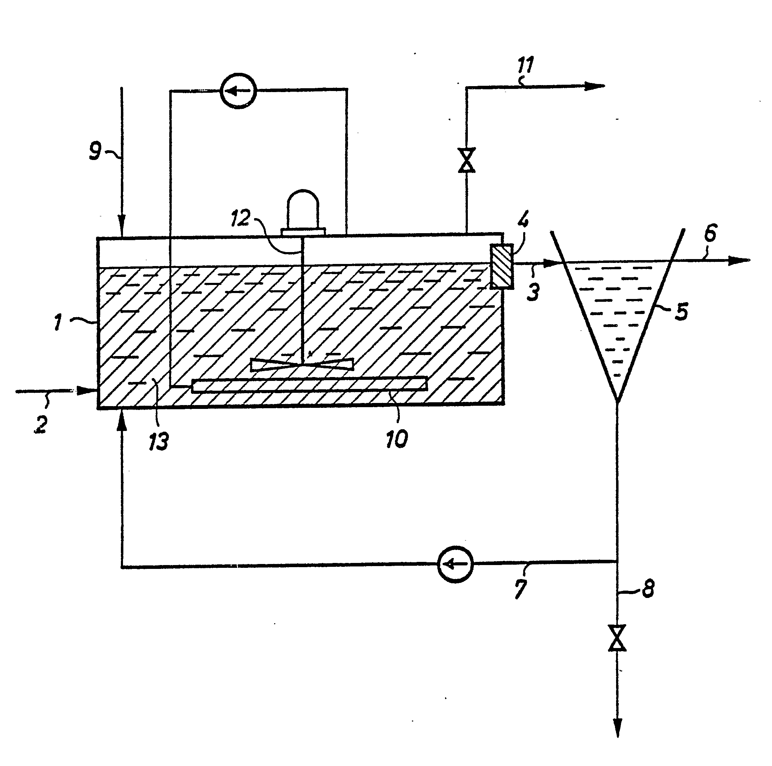

In der Zeichnung ist ein vorteilhaftes Ausführungsbeispiel einer Vorrichtung zur Durchführung des Verfahrens schematisch dargestellt, das nachstehend näher erläutert wird.

In der Figur ist mit 1 ein gegen die Atmosphäre geschlossener und als volldurchmischtes Belebungsbecken ausgebildeter Reaktor bezeichnet. In dem Belebungsbecken 1 sind, wie durch die Schraffierung angedeutet ist, als Trägermaterial für die Mikroorganismen makroporöse Stoffteilchen 13 mit einem Durchmesser von 5 bis 50 mm, mit einem spezifischen Gewicht von 10 bis 200 kg/m³ und mit offenen Makroporen von 0,1 bis 3 mm, insbesondere aus Polyurethanweichschaum, in einer Menge frei beweglich angeordnet, die einen Volumenanteil von 5 bis 70% des Volumens des Belebungsbeckens 1 entspricht.

Das zu behandelnde Abwasser wird über einen Zulauf 2 in das Belebungsbecken 1 eingeleitet, während das behandelte Abwasser über einen im oberen Bereich des Belebungsbeckens 1 angeschlossenen Ablauf 3, dem eine Trenneinrichtung 4 zum Zurückhalten der einzelnen Stoffteilchen, die beispielsweise ein einfaches Sieb sein kann, abgezogen wird. Der Ablauf 3 des Belebungsbeckens 1 steht mit einer als Absetzbecken ausgebildeten Nachklärung 5 in Verbindung, die eine Ableitung 6 für gereinigtes Abwasser, eine Schlammrückleitung 7 mit Pumpe zur Rückleitung von Schlamm in das Belebungsbecken 1 sowie eine Schlammableitung 8 für Überschussschlamm aufweist.

Zur Sauerstoffversorgung der Mikroorganismen ist vorgesehen, dem sich unter der Abdeckung des Belebungsbeckens 2 ausbildenden Gasraum über eine Zufuhrleitung 9 technisch reinen Sauerstoff oder zumindest ein mehr Sauerstoff als Luft enthaltendes Gas zuzuleiten und das im Gasraum befindliche Gas über eine Leitung einem nahe dem Boden des Belebungsbeckens 1 angeordneten Gasverteiler 10 zuzuführen. Abgas wird über eine ventilgesteuerte Abgasleitung 11 abgezogen. Die aufsteigenden Gasblasen des Belüftungsgases erzeugen dabei genügend Auftrieb, um die mit Biomasse beladenen Stoffteilchen 13, deren spezifisches Gewicht im allgemeinen nur geringfügig über dem von Wasser liegt, in Schwebe zu halten.

Um eine möglichst gute Durchmischung und einen guten Stoffumsatz zu erreichen, ist eine Umwälzeinrichtung 12, beispielsweise bestehend aus einer einfachen Rühreinrichtung mit Elektromotorantrieb, unmittelbar über dem Gasverteiler 10 angeordnet.

Neben der in der Figur gezeigten Anordnung der Zufuhrleitung 9 für Behandlungsgas besteht auch die Möglichkeit, eine Gaszufuhrleitung direkt über mehrere Anschlüsse am Boden des Belebungsbeckens 1 anzuschliessen und auf diese Weise eine zusätzliche, nach oben gerichtete Gasströmung zu erzeugen. Ebenso kann der Abwasserzulauf 2 mehrere über dem Beckenboden verteilte Anschlüsse aufweisen, um im Belebungsbecken auch eine nach oben gerichtete Flüssigkeitsströmung aufrechtzuerhalten.

Da 1 m³ Schaumstoff mehr als 30 kg biologische Trockensubstanz aufnehmen und binden kann, können auch bei der Behandlung von hochbelasteten Abwässern die Volumen des Belebungsbeckens 1 und der Nachklärung 5 gegenüber dem bei herkömmlichen Belebungsverfahren notwendigen Beckenvolumen reduziert werden. Ebenso kann die aus der Nachklärung 5 in das Belebungsbecken 1 zurückzuführende Menge des Belebtschlamms gegenüber herkömmlichen Belebungsverfahren verringert werden. Zeitweise besteht sogar die Möglichkeit, die Schlammrückführung durch Abschalten der Pumpe in der Schlammrückleitung 7 zu unterbinden.

Nachstehend sind Zahlenangaben für ein Auslegungsbeispiel einer nach dem erfindungsgemässen Verfahren betriebenen Belebungsanlage im Vergleich zu einer herkömmlichen Belebungsanlage angegeben.

*Tabelle →*

## Patentansprüche

1. Verfahren zur biologischen Reinigung von organische Verunreinigungen enthaltendem Abwasser, bei dem das Abwasser in einem Reaktor in Gegenwart von auf einem Trägermaterial fixierter Biomasse mit Luft und/oder reinem Sauerstoff begast und anschliessend in einer Nachklärung gereinigtes Wasser und Schlamm getrennt wird und bei dem in den Reaktor als Trägermaterial für die Mikroorganismen Stoffteilchen in stückiger und/oder granulierter Form in solcher Menge eingebracht werden, dass die einzelnen Stoffteilchen frei beweglich im Abwasser schweben, dadurch gekennzeichnet, dass als Trägermaterial Stoffteilchen aus synthetischen organischen Polymerverbindungen mit einer Grösse von 5 bis 50 mm, mit offenen Makroporen von 0,1 bis 3 mm und mit einem spezifischen Gewicht im trockenen Zustand von 10 bis 200 kg/m³ verwendet werden und dass zumindest zeitweise Belebtschlamm aus der Nachklärung in den Reaktor zurückgeleitet und im Reaktor neben der auf dem Trägermaterial fixierten

*Auslegungsbeispiel:*

| | herkömmliches Belebtschlammverfahren | neues Verfahren |
|---|---|---|
| Abwasserzulaufmenge (m³/h) | 100 | 100 |
| Belebungsbeckenvolumen (m³) | 400 | 100 |
| Polyurethanschaumsatz ($\delta$ = 40 kg/m³) (m³) | — | 60 |
| $TS_R$ (fixiert) (kg/m³) | — | 15 |
| $TS_R$ (nicht fixiert) (kg/m³) | 4 | 0,9 |
| $TS_R$ (gesamt) (kg/m³) | 4 | 15,9 |
| Raumbelastung (kg/m³·d) | 2,4 | 9,5 |
| Schlammbelastung (kg/kg·d) | 0,6 | 0,6 |
| spez. Überschussschlammproduktion (kg/kg) | 0,7 | 0,7 |
| $TS_{RS}$ (kg/m³) | 12 | 10 |
| Schlammindex $IS_V$ (ml/g) | 100 | 100 |
| Rücklaufverhältnis (%) | 50 | 10 |
| Vergleichsschlammvolumen $VS_V = TS_R \cdot IS_V$ (l/m³) | 400 | 90 |
| Oberflächenbeschickung $q_F$ (zulässig) (m/h) | 0,75 | 3 |
| Oberfläche Nachklärbecken $F_{NK}$ (m²) | 135 | 35 |
| Durchmesser des Nachklärbeckens (m) | 13.1 | 6,6 |
| Tiefe des Nachklärbeckens (m) | 10 | 5 |
| Volumen des Nachklärbeckens (m³) | 500 | 60 |
| Gesamtinvestitionskosten für die Nachklärung (DM) | 200 000 | 50 000 |
| Investitionskosten für das Belebungsbecken (inkl. Kosten für PUR-Füllung) (DM) | 150 000 | 90 000 |

Biomasse auch freier Belebtschlamm aufrechterhalten wird.

2. Verfahren nach Anspruch 1, dadurch ge- kennzeichnet, dass als Trägermaterial Stoffteil- chen aus Polyurethanweichschaum und/oder Harnstoff/Formaldehyd-Harzen und/oder Polyäthylen und/oder Polypropylen und/oder Silikonpolymer verwendet werden.

3. Verfahren nach einem der Ansprüche 1 oder 2, dadurch gekennzeichnet, dass in den Reaktor als zu reinigendes Abwasser der Ablauf eines Tropfkörpers und/oder einer chemischen und/ oder chemisch-physikalischen Reinigungsstufe eingeleitet wird.

## Claims

1. A process for the biological purification of waste water which contains organic impurities, in which the waste water is treated with air and/or pure oxygen in a reactor in the presence of a biomass fixed on a carrier material, and, subsequently, in a final clarification step, purified water and sludge are separated, and in which as carrier material for the micro-organisms, particles in the form of lumps and/or granules are introduced into the reactor in such an amount that the individual particles float freely in the waste water, characterised in that particles consisting of synthetic organic polymeric compounds and having a size of 5 to 50 mm, open macro-pores of 0.1 to 3 mm and a specific gravity in the dry state of 10 to 200 kg/m³ are used as a carrier material; and that activated sludge is at least at times returned from the final clarification step to the reactor and in addition to the biomass fixed on the carrier material, free activated sludge is maintained in the reactor.

2. A process as claimed in Claim 1, characterised in that particles consisting of soft polyurethane foam, and/or urea/formaldehyde resins, and/or polyethylene, and/or polypropylene, and/or silicone polymer are used as carrier material.

3. A process as claimed in Claim 1 or 2, characterised in that the discharge from a trickle filter, and/or a chemical and/or chemico-physical purification stage, is introduced into the reactor as waste water to be purified.

## Revendications

1. Procédé d'épuration biologique d'eau résiduaire contenant des impuretés organiques, dans lequel l'eau résiduaire est gazéifiée avec de l'air et/ou de l'oxygène pur dans un réacteur en présence d'une biomasse fixée sur une matière porteuse et est ensuite séparée dans une zone de postclarification en eau épurée et en boue, et dans lequel on introduit dans le réacteur, comme matière porteuse des micro-organismes, de petites particules de matière sous forme de morceaux et/ou de granules en quantité telle que les différentes particules flottent librement dans l'eau résiduaire, caractérisé en ce que l'on utilise, comme matière porteuse, des particules formées de composés polymères organiques synthétiques d'une grosseur de 5 à 50 mm, présentant des macropores ouverts de 0,1 à 3 mm et un poids spécifique à l'état sec de 10 à 200 kg/m³, et en ce que de la boue activée provenant de la postclarification est recyclée au moins temporairement dans le réacteur, cependant que la boue activée libre est conservée dans le réacteur en plus de la biomasse fixée sur la matière porteuse.

2. Procédé selon la revendication 1, caractérisé en ce que, comme matière porteuse, on utilise des particules de mousse molle de polyuréthanne et/ou de résines de formaldéhyde/urée et/ou de polyéthylène et/ou de polypropylène et/ou de polymère de silicone.

3. Procédé selon l'une des revendications 1 ou 2, caractérisé en ce que l'on introduit dans le réacteur, comme eau résiduaire à épurer, l'effluent d'un lit bactérien et/ou d'un étage d'épuration chimique et/ou physico-chimique.